# EUROPEAN PATENT APPLICATION

(11) **EP 0 748 934 A2**
(43) Date of publication of application: **18.12.1996**
(21) Application number: 96304482.1
(22) Date of filing: 17.06.1996
(51) Int. Cl.: F02M 55/02

(54) **A pipe assembly**

(30) Priority: 16.06.1995 GB 9512285
(71) Applicant: ROVER GROUP LIMITED, Bickenhill Birmingham B37 7HQ (GB); EAGLE PICHER FLUID SYSTEMS LIMITED, Market Harborough, Leicestershire LE16 7QE (GB)
(72) Inventor: Davies, John Main, Hampton Magna, Warwick CV35 8TJ (GB); Doherty, Raymond Paul, Coventry, CV4 9DS (GB)
(74) Representative: Adkins, Michael

(57) **Abstract**

The pipe assembly 10 comprises a plurality of fuel pipes 12, 14 having a fire retardant covering 16. The fire retardant covering 16 covers both of the pipes 12, 14 and also forms a web which joins the pipes together. The pipe assembly is particularly useful as fuel piping in motor vehicles. When installing the pipe assembly in a vehicle, portions of the pipes 12, 14 at the ends of the assembly 10 can be separated with their fire retardant covering intact to permit those portions to be routed independently to appropriate connection points.

## Description

The invention relates to a pipe assembly and particularly but not exclusively to a fuel pipe assembly for a vehicle.

In internal combustion engines using fuel injection, whether diesel or petrol, two fuel pipes are normally needed. In the case of diesel injection systems one pipe supplies fuel from the tank to the injection system and the second is a fuel return from the injectors and injection pump to the fuel tank. In the case of petrol engines the second pipe provides a return from a pressure regulator or a vapour return from a throttle body or other part of the engine induction system. Such pipes are typically made from plastics material such as nylon and the pipes are often coated with a fire retardant elastomer covering. It is known to couple or "siamese" plastic fuel pipes by forming the pipes integrally with a web joining the pipes together.

It is an object of the invention to provide an improved pipe assembly.

According to one aspect of the invention there is provided a pipe assembly comprising a plurality of separate pipes and a fire retardant covering which covers the pipes and forms a web which joins the pipes together.

In that way the pipes can be coupled while being provided with a complete fire retardant covering.

The web preferably has one or more apertures defined therein.

In that way a conventional duplex clip can be used to mount the pipes to a vehicle body with part of the clip extending through the apertures in the web.

Apertures in the web are preferably regularly spaced.

Such a construction reduces build up of dirt, aids manufacture and installation and reduces the weight of the pipe assembly.

The pipes are preferably made of extruded thermoplastics material such as nylon 11 or nylon 12. The fire retardant pipe covering may be a melt processible elastomer. Alternatively the fire retardant may be a thermoset material or composition.

According to another aspect of the invention there is provided a pipe assembly comprising a plurality of separate pipes and a fire retardant covering which covers the pipes and joins the pipes together.

Fuel pipe assemblies in accordance with the invention will now be described in detail, by way of example, and with reference to the accompanying drawings, in which:
Fig. 1 is a plan view of a fuel pipe assembly in accordance with the invention;
Fig. 2 is a perspective view of the fuel pipe assembly of Fig. 1 with parts of the fire retardant covering cut away to show the fuel pipes;
Fig. 3 is a cross-section of the fuel pipe assembly of Figs. 1 and 2 taken on line III-III in Fig. 1;
Fig. 4 is a perspective view of a duplex clip for use with the pipe assembly of Figs. 1 to 3;
Fig. 5 is a sectional view of the clip of Fig. 4 mounting the pipe assembly to the body of a vehicle;
Fig. 5a is a similar view to Fig. 5 with the clip shown with a screw extending through the clip into the body;
Fig 5b shows a modified form of the clip of Fig 5;
Fig. 6 is a cross-sectional view of an alternative form of clip mounting the pipe assembly of Figs. 1 to 3 to the body of a vehicle;
Fig. 6a is a cross sectional view of a modified form of clip of Fig. 6; and
Fig. 7 is a cross sectional view of a further form of clip mounting the pipe assembly of Figs. 1 to 3 to the body of a vehicle.
Fig. 8 is a perspective view of a fuel system of an internal combustion engine which includes a pipe assembly in accordance with the present invention.

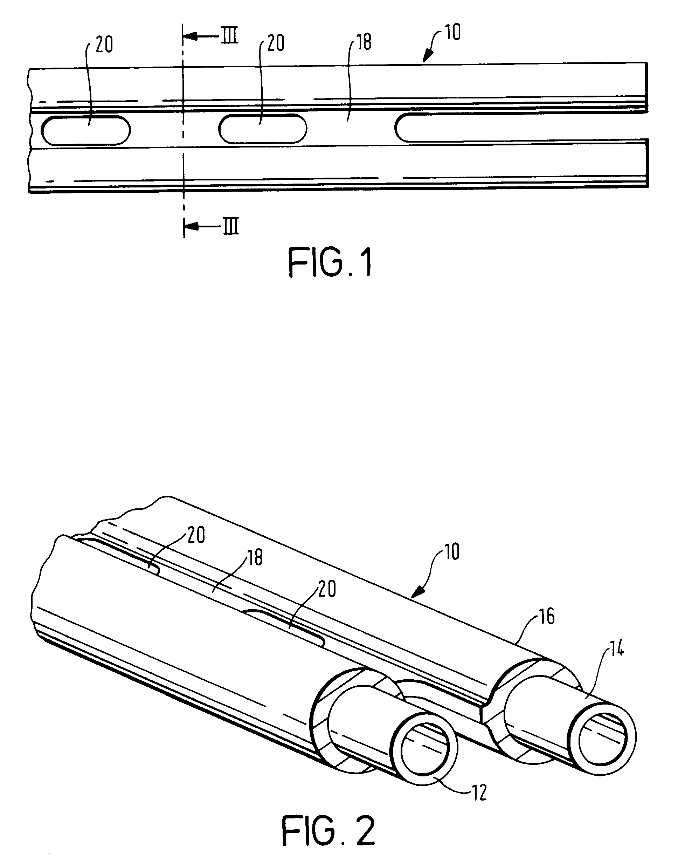

In Figs. 1 to 3, a fuel pipe assembly is generally indicated at 10. The fuel pipe assembly 10 comprises two separate fuel pipes 12,14 and a fire retardant covering 16. The fire retardant covering 16 covers the pipes 12,14 and joins the pipes 12,14 by forming a web 18 of fire retardant material which extends between the two covered pipes 12,14.

The web 18 has elongate apertures 20 formed at regular intervals therein which can be used when mounting the assembly on the body and which help prevent build up of dirt.

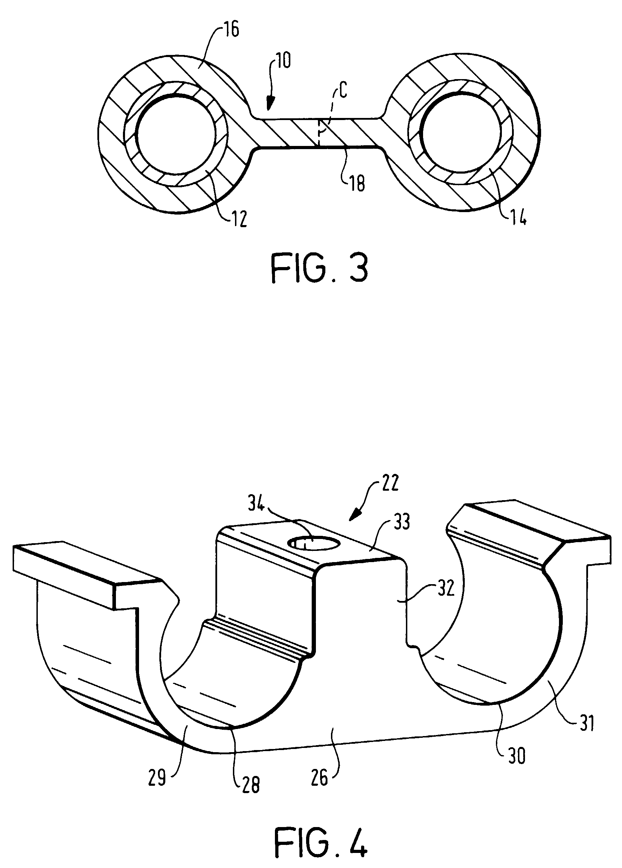

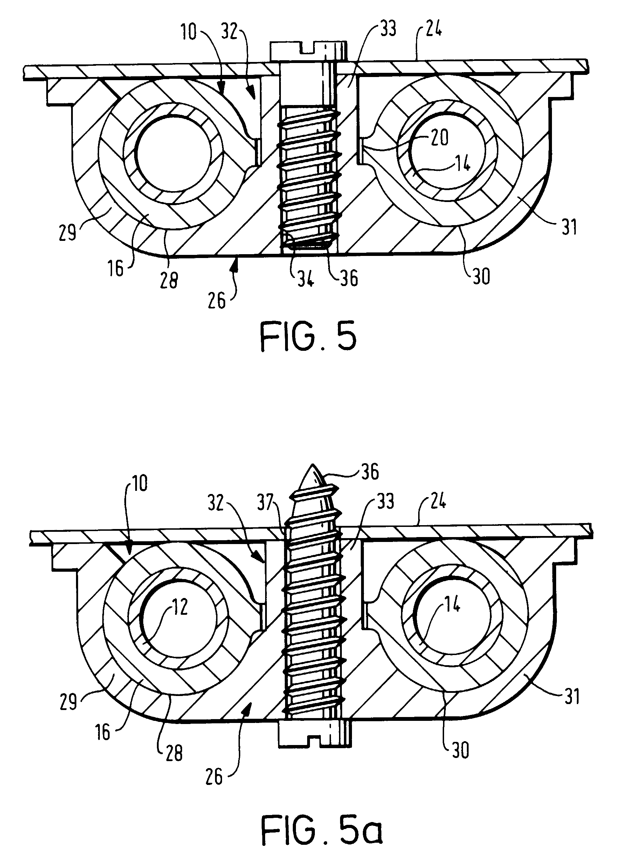

Figs. 4 and 5, show a clip 22 for clipping the fuel pipe assembly of Figs. 1 to 3 to a vehicle body 24. The clip 22 comprises a body 26 having a pair of spaced apart, part-circular rebates 28,30 defined by part-circular wall portions 29 and 31 and a common wall 32 between the rebates. The rebates 28,30 are of such a size and spacing that they receive the covered pipes 12,14 closely, preferably with a snap-fit enabled by the half-circular wall extending past the common diametral plane. The common wall 32 provides a projection 33 dimensioned to pass closely through one of the apertures 20 in the web 18 of the fire retardant covering 16. The projection 33 has a bore 34 formed therein which extends vertically through the body 26 as viewed in Fig. 5.

In use, the pipes 12,14 are located in the rebates 28,30 with a snap-fit and the projection 33 extends through one of the apertures 20 in the web 18. The assembly can then be fastened to the vehicle body 24 by means of a screw, stud or bolt 36. Where a screw 36 is used as in Fig. 5, the screw may be a self-tapping type such that the thread of the screw cuts into the wall of bore 34. Where the assembly is fastened to the vehicle body 24 as shown in Fig. 5a, the screw 36 may again be of a self-tapping type and cuts its own thread in the wall of an aperture 37 in the vehicle body. As shown in Fig 5b, the body 26 can be formed with a screw-threaded projection 35 which can pass through the aperture 37 for receiving a nut 35a.

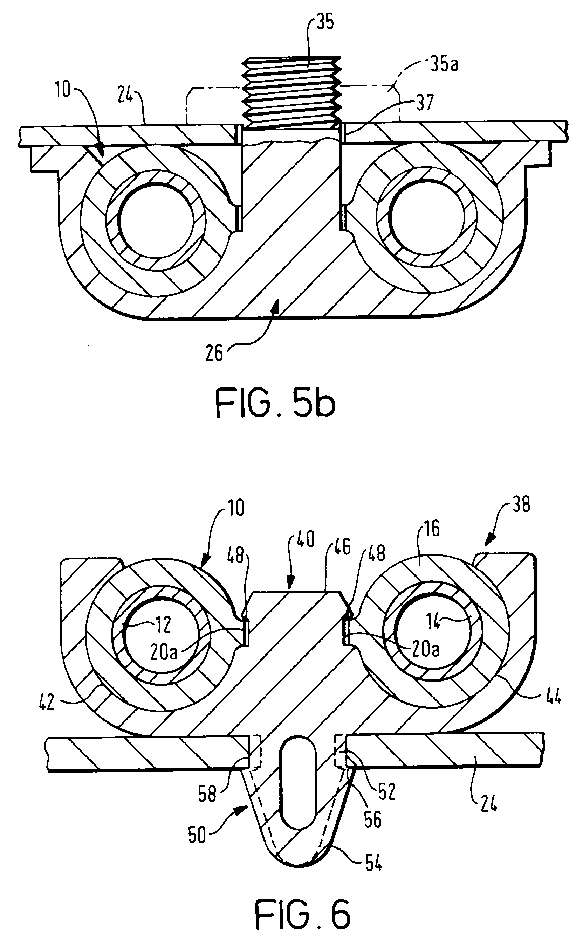

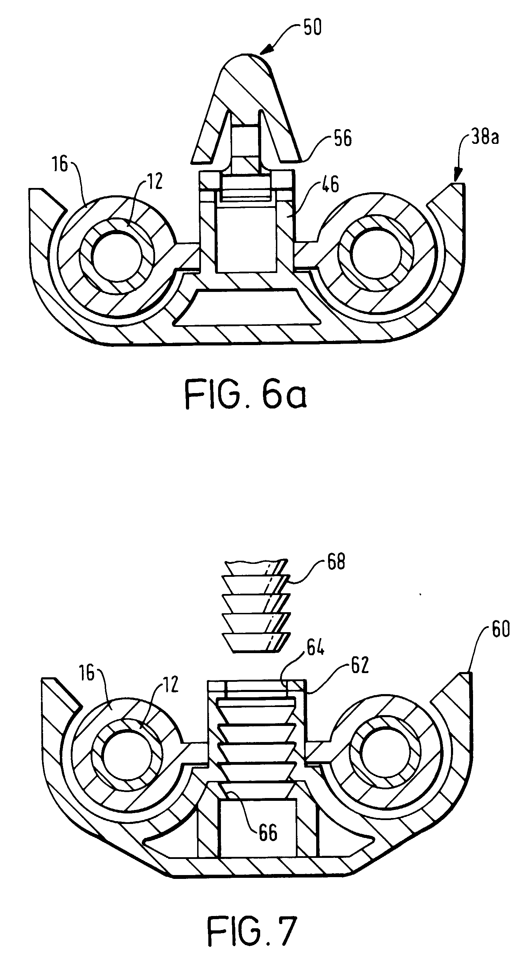

Fig. 6 shows an alternative clip 38 which can be used to clip the pipe assembly 10 of Figs. 1 to 3 to the vehicle body 24. The clip 38 comprises a body 40 having two spaced substantially circular rebates 42,44 similar to rebates 28,30 which are arranged to receive the pipes 12,14 with a snap-fit. A projection 46 on body 40 defines undercuts 48 and extends through one of the apertures 20 so that opposite elongate edges 20a of the aperture snap fit into the undercuts. Such an arrangement provides additional retention of the pipe assembly 10 in the clip 38.

A vehicle body engaging portion 50 extends from the body 40 of the clip 38 in the opposite direction to the projection 46. The engaging portion 50 comprises a stem 52 and an engaging head 54 which defines a shoulder 56 with the stem 52. The stem 52 is preferably substantially similar in length to the thickness of the vehicle body 24. The clip and pipe assembly can then be clipped to the vehicle body 24 by pushing the engaging portion 50 through an aperture 58 in the body so that the shoulder 56 snap-fits therethrough.

The clip 38a in fig 6a is similar to the clip 38 of fig. 6 in most respects except that the vehicle body engaging portion 50 extends from the top of the projection 46.

In order to attach the pipe assembly 10 of figs. 1 to 3 to the vehicle body (not shown) using the clip 38a, the body engaging portion 50 and projection 46 are pushed through the aperture 20 in the web and then the body engaging portion 50 is pushed into a suitable aperture in the vehicle body. The shoulder 56 snaps past the aperture in the vehicle body so that the clip 38a is retained against the vehicle body, holding the pipe assembly in place.

A further alternative form of clip 60 is illustrated in fig. 7. The clip 60 is substantially similar to the clip 22 in figs 5 to 5b.

The clip 60 has a projection 62 which has a countersunk bore 64 formed therein. The bore 64 has annular ribs 66 projecting inwardly from the inner wall thereof. The bore 64 is arranged to receive a ribbed member 68 on the vehicle body (not shown). In order to attach the pipe assembly 10 to the vehicle, the clip 60 is arranged so that the projection 62 extends through the aperture 20 in the web and the clip is pushed onto ribbed member 68 so that the member is received in the bore 64. The annular ribs 66 retain the member 68 in the bore 64 by engaging behind the ribs on the ribbed member 68. The ribs 66 are angled so as to prevent return movement of the ribbed member 68 out of the bore 64.

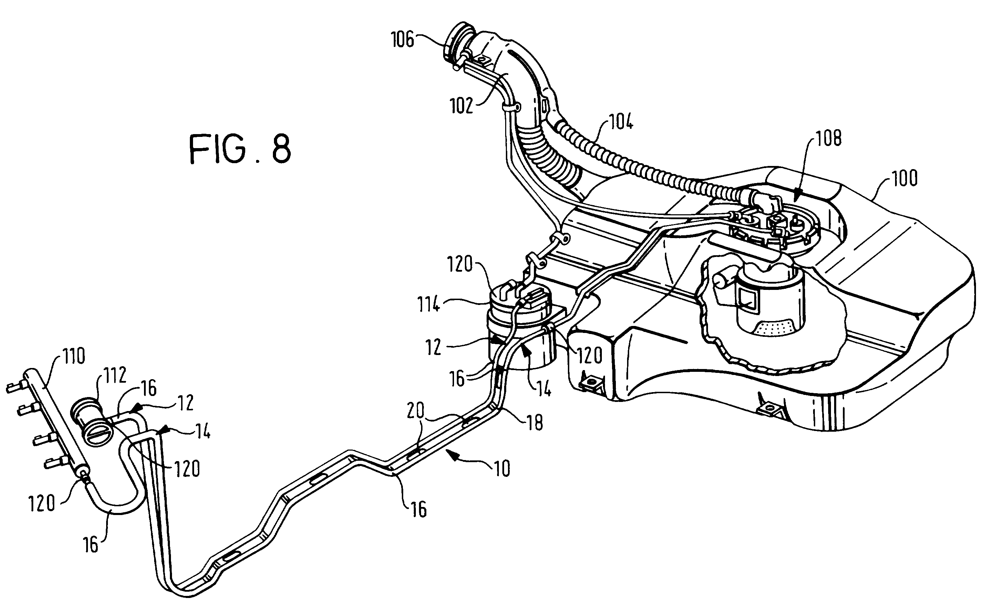

Fig. 8 shows a fuel tank and fuel supply assembly for an internal combustion engine of a vehicle and which includes a fuel pipe assembly 10 in accordance with the invention. A fuel tank 100 has a fuel filler pipe 102 and a breather pipe 104 extending therefrom in known manner. A fuel tank module comprising a fuel pump, filter and level transducer is generally indicated at 108. The pipe assembly 10 comprises pipes 12,14 coupled together by means of a fire retardant covering 16. The pipe 14 connects the fuel pump in the module 108 to an injector rail 110 of an engine. The injector rail 110 lies adjacent a throttle body 112 which is connected by means of the pipe 12 to a carbon filter 114 and thence back to the fuel tank 100. The pipe assembly 10 is attached to the vehicle body 24 by e.g. clipping as described herein. The web 18 which joins the pipes 12,14 together is split at each end of the assembly 10 by cutting centrally along the web 18 as indicated at C in Fig. 3 or centrally through the layer 69 as indicated at C' in Fig. 9. Such cutting allows the pipes 12, 14 to follow independent routes to the appropriate connection points. The split ends of the pipe assembly 10 remain covered with the fire retardant covering 16 of depth d. In that way the coupled pipes 12, 14 may be routed compactly with a minimum of fixing time along common paths and then split to enable the separate pipes to be routed independently of the covered pipe ends. Sleeves or muffs (not shown) can be used at respective points 120 to bridge any gaps between the ends of the pipes 12, 14 and adjacent surfaces of unions to which the pipes are connected.

In all of the embodiments the pipes may be made from thermoplastic material in a single layer or multiple layer tube construction. Alternatively a thermoplastic alloy construction may be used. The pipes may include an electro static dissipation layer within the construction, for instance a polymer with a suitable carbon black contact or aluminium foil.

In the case of a single layer tube construction thermoplastic/polyamides, such as Nylon (PA) 6, 11 or 12, are used.

To limit hydrocarbon emissions, fluoro-polymers such as PTFE, ETFE, PVDF or a mixture thereof and also saturated polyesters such as PBT may be used in multilayer tube constructions.

The protective cover primarily acts to reduce flammability. Other advantages include resistance to chemical attack, abrasion and initial ease of assembly. The cover is typically a melt processible elastomer such as those sold under the trade marks "Santoprene", "Alcryn" and "Hyperlon". If required the materials of the cover may be modified to include additives which could improve chemical resistance, flame retardancy and the like.

Although the fire retardant covering 16 is described as covering and joining two pipes 12, 14 together, three or more pipes could be covered and joined by the covering 16.

## Claims

1. A pipe assembly comprising a plurality of separate pipes and a fire retardant covering which covers the pipes and forms a web which joins the pipes together.

2. A pipe assembly according to claim 1, in which the web has one or more apertures defined therein.

3. A pipe assembly according to claim 2, in which apertures in the web are regularly spaced.

4. A pipe assembly according to any preceding claim, in which the pipes are made of thermoplastic polymer, such as nylon 11 or nylon 12.

5. A pipe assembly according to any preceding claim, in which the covering is a thermoplastic or thermoset elastomer.

6. A pipe assembly according to any preceding claim, in which the pipes are fuel pipes.

7. A pipe assembly according to any preceding claim, in which portions of the pipes at one end of the pipe assembly are separated to leave each portion with its own fire retardant covering.

8. A pipe assembly according to claim 7, in which portions of the pipes at both ends of the pipe assembly are separated to leave each portion with its own fire retardant covering.

9. A vehicle having a fuel supply, receiver means which receives the fuel from the fuel supply and return means to the fuel supply for fuel/fuel vapour, a pipe assembly in accordance with claim 7 or 8 being provided whereby one pipe of the assembly connects the fuel supply to the receiver means and the other pipe connects the fuel supply to the fuel/fuel vapour return means, the portions of the pipes at one end or both ends of the pipe assembly being separated to leave each separated end portion with its own fire retardant covering.
